# EUROPÄISCHE PATENTSCHRIFT

(11) **EP 1 661 004 B1**
(45) Veröffentlichungstag und Bekanntmachung des Hinweises auf die Patenterteilung: **07.11.2007**
(21) Anmeldenummer: 04764816.7
(22) Anmeldetag: 03.09.2004
(51) Int. Cl.: G06F 12/08, H04L 12/26

(54) **VERFAHREN UND SYSTEM ZUR HANDHABUNG VON DATEN BASIEREND AUF DER QUITTIERUNG UND DEM ZURÜCKZIEHEN VON DATENPAKETEN**
METHOD AND SYSTEM FOR HANDLING DATA BASED ON THE ACKNOWLEDGEMENT AND EXTRACTION OF DATA PACKETS
PROCEDE ET SYSTEME DE MANIPULATION DE DONNEES SUR LA BASE DE L'ACCUSE DE RECEPTION ET DU RETRAIT DE PAQUETS DE DONNEES

(30) Priorität: 04.09.2003 DE 10340865
(43) Veröffentlichungstag der Anmeldung: 31.05.2006
(73) Patentinhaber: SIEMENS AKTIENGESELLSCHAFT, 80333 München (DE)
(72) Erfinder: SCHÄFER, Philipp, 76189 Karlsruhe (DE)
(86) Internationale Anmeldenummer: PCT/EP2004/009864
(87) Internationale Veröffentlichungsnummer: WO 2005/024637

(56) Entgegenhaltungen:
- WO-A-95/25306
- US-A1- 2002 141 353
- US-B1- 6 609 165

## Beschreibung

Die Erfindung betrifft ein Verfahren zur Handhabung, nämlich zum Versenden und Zurückziehen, von Daten, insbesondere von Nachrichten, in einem System mit mindestens einer Datenquelle und mehreren Datenempfängern. Weiterhin betrifft die hier vorliegende Erfindung ein entsprechendes System.

Es gibt eine Vielzahl von Anwendungsfällen, in welchen von einer Datenquelle Daten an mehrere Datenempfänger übermittelt werden, wobei jedoch ein übermitteltes Datum jeweils nur von einem Datenempfänger bearbeitet werden muss. Als Beispiel sei hier ein Automatisierungssystem genannt, wobei in dem Automatisierungssystem von einer als Datenquelle dienenden Automatisierungseinrichtung eine Warnnachricht bzw. eine Fehlermeldung an mehrere als Datenempfänger dienende Automatisierungseinrichtungen übermittelt wird, wobei die Warnnachricht bzw. Fehlermeldung dann, wenn eine der als Datenempfänger dienenden Automatisierungseinrichtungen die Warnnachricht bearbeitet hat, für die übrigen als Datenempfänger dienenden Automatisierungseinrichtungen ungültig wird.

Nach dem Stand der Technik besteht das Problem, dass auf den Datenempfängern, an welche zum Beispiel eine Warnnachricht übermittelt wurde, diese auch dann erhalten bleibt, wenn die Warnnachricht bereits von einem der Datenempfänger bearbeitet wurde. Dies kann zu Problemen mit veralteten bzw. bereits bearbeiteten Daten führen. Wurde nämlich zum Beispiel eine Warnnachricht von einem Datenempfänger bearbeitet, so ist eine erneute Bearbeitung durch einen anderen Datenempfänger überflüssig. Es besteht daher das Bedürfnis, Daten von einer Datenquelle gezielt an mehrere Datenempfänger zu versenden, und andererseits auch das Zurückziehen von Daten gezielt zu ermöglichen.

Zum Versenden und Zurückziehen von Daten ist es aus dem Stand der Technik bekannt, jedes Datum zusammen mit einem Timeout an die Datenempfänger zu übermitteln. Ein Timeout bestimmt eine Zeitspanne, nach der ein Datum unabhängig von dessen Bearbeitung von einem Datenempfänger zurückgezogen wird. Die Verwendung solcher Timouts verfügt über den Nachteil, dass ein Datum auch dann von allen Datenempfängern zurückgezogen werden kann, wenn noch keiner der Datenempfänger die Bearbeitung des Datums vorgenommen hat. Des weiteren besteht nach wie vor das Problem mit veralteten Daten, da auch bei Verwendung eines Timeouts die doppelte Bearbeitung eines Datums innerhalb des Timeouts nicht ausgeschlossen werden kann. Dies ist insgesamt nachteilhaft.

WO 95/25306 offenbart ein Computersystem mit verteilten und von mehreren Prozessoren verwendeten Cache-Speichern. Diese Cache-Speicher können dabei als sekundäre, tertiäre und/oder als Software-Speicher implementiert sein. Durch die Verteilung der Caches, die von mehreren Prozessoren verwendet werden, kann eine Störung und eine Konkurrenz-Situation unter den Prozessoren in Bezug auf den von ihnen gemeinsam verwendeten Cache-Speicher vermieden werden. Ferner wird die Zugriffszeit auf den Cache für die einzelnen Prozessoren verringert. In einer Ausführungsform dienen mehrere primäre Caches als Datenquellen für sekundäre Cache-Lines, die als Datenempfänger dienen. Sowohl die Datenquellen als auch die Datenempfänger tauschen Nachrichten aus. Zum Beispiel sendet die als Datenempfänger dienende sekundäre Cache-Line nach einer "Invalidation"-Operation, die mittels einer zuvor von einem Primär-Cache an die sekundäre Cache-Line über eine Nachricht beauftragt worden ist, eine quittierte Nachricht an die Datenquelle zurück, wenn die "Invalidation-Operation" ausgeführt ist.

Aus der US 6 609 165 B1 sind ein Verfahren und eine Vorrichtung zur Handhabung von Nachrichten in einem Netzwerk mit einem Speichergerät und einer Vielzahl von Ein-/Ausgabegeräten bekannt.

Hiervon ausgehend liegt der vorliegenden Erfindung das Problem zu Grunde, ein neuartiges Verfahren zur Handhabung von Nachrichten sowie eine entsprechende Automatisierungseinrichtung und ein Automatisierungssystem zu schaffen.

Dieses Problem wird dadurch gelöst, dass das eingangs genannte Verfahren durch die Merkmale des Anspruchs 1 weitergebildet ist. Erfindungsgemäß wird dann, wenn von einem der Datenempfänger eine von der Datenquelle versendete Nachricht quittiert wird, diese quittierte Nachricht für die übrigen Datenempfänger automatisch zurückgezogen. Unter der Quittierung der Nachricht ist nicht die bloße Empfangsbestätigung einer von der Datenquelle versendeten Nachricht zu verstehen, sondern vielmehr die aktive Bestätigung eines Datenempfängers über die Bearbeitung der von der Datenquelle versendeten Nachricht.

Im Sinne der hier vorliegenden Erfindung wird demnach vorgeschlagen, dass ein versendetes Datum als Reaktion auf die Bearbeitung des Datums durch einen Datenempfänger automatisch von den übrigen Datenempfängern, an die das Datum übermittelt wurde, zurückgezogen wird. Dies übernimmt vorzugsweise die Datenquelle. Hierdurch ist sichergestellt, dass unmittelbar nach der Bearbeitungsquittierung eines Datums dasselbe von den Datenempfängern zurückgezogen wird und somit Probleme mit veralteten Daten sicher und gezielt vermieden werden können.

Nach einer vorteilhaften Weiterbildung der Erfindung wird das Datum an mehrere Datenempfänger versendet, wobei jeder Datenempfänger den Empfang des Datums dadurch bestätigt, dass jeder Datenempfänger an die Datenquelle eine Empfangsbestätigung übermittelt. Der Datenempfänger, welcher nach dem Empfang des Datums zusätzlich auch die Bearbeitung desselben quittiert, übermittelt eine Bearbeitungsbestätigung an die Datenquelle, wobei auf Basis der Bearbeitungsbestätigung dieses Datum von der Datenquelle für die übrigen Datenempfänger automatisch zurückgezogen wird.

Das erfindungsgemäße System ist im unabhängigen Patentanspruch 8 definiert. Das erfindungsgemäße Automatisierungssystem ist im unabhängigen Patentanspruch 13 definiert.

Bevorzugte Weiterbildungen der Erfindung ergeben sich aus den Unteransprüchen und der nachfolgenden Beschreibung.

Nachfolgend wird ein bevorzugtes Ausführungsbeispiel der Erfindung - ohne hierauf beschränkt zu sein - anhand der Zeichnung näher erläutert. In der Zeichnung zeigt:
- Figur 1: eine schematische Darstellung eines Systems zur Handhabung von Daten, und
- Figur 2: ein Ablaufdiagramm zur Verdeutlichung des erfindungsgemäßen Verfahrens.

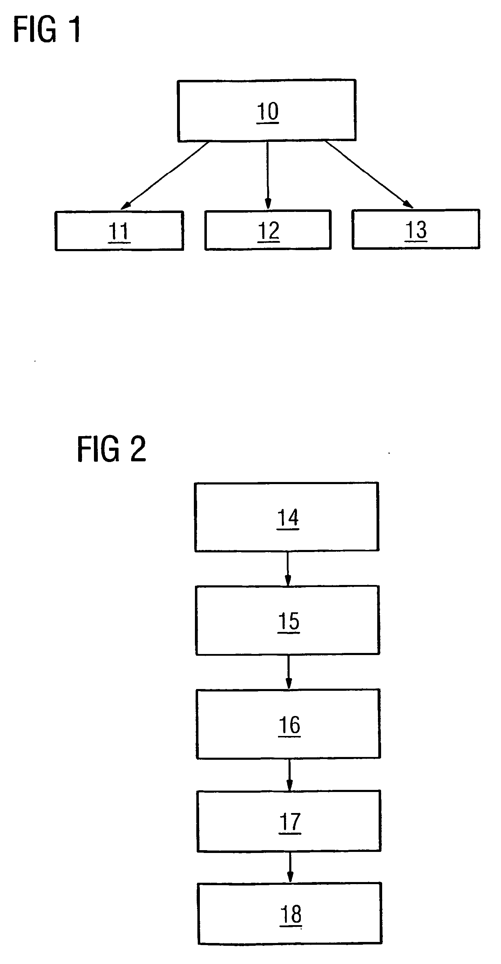

Figur 1 zeigt ein System zur Handhabung von Daten mit einer Datenquelle 10 und insgesamt drei Datenempfängern 11, 12 und 13. Die Datenquelle 10 übermittelt ein Datum an alle drei Datenempfänger 11, 12 und 13. Das übermittelte Datum ist nur von einem der Datenempfänger 11, 12 bzw. 13 zu bearbeiten. Wenn die Bearbeitung durch einen der Datenempfänger 11, 12 bzw. 13 erfolgt ist, verliert das Datum für die übrigen Datenempfänger seine Gültigkeit, das Datum ist dann für die übrigen Datenempfänger veraltet.

Erfindungsgemäß wird vorgeschlagen, dass dann, wenn von einem der Datenempfänger 11 bzw. 12 bzw. 13 ein von der Datenquelle 10 versendetes Datum quittiert wird, dieses quittierte Datum für die übrigen Datenempfänger 12 und 13 bzw. 11 und 13 bzw. 11 und 12 zurückgezogen wird. Das Zurückziehen eines Datums erfolgt von der Datenquelle 10. Erfindungsgemäß erfolgt das Zurückziehen eines Datums als Reaktion auf die Bearbeitung des Datums durch einen der Datenempfänger und damit durch einen der Adressaten des Datums.

Obwohl das Zurückziehen des quittierten Datums vorzugsweise durch die Datenquelle 10 erfolgt, ist es auch vorstellbar, dass der Datenempfänger, welcher die Bearbeitung des Datums quittiert, das Zurückziehen des quittierten Datums von den übrigen Datenempfängern vornimmt. Aus Sicherheitsgründen wird das Zurückziehen des quittierten Datums jedoch von der Datenquelle 10 vorgenommen.

Das erfindungsgemäße Verfahren wird nachfolgend unter Bezugnahme auf Figur 2 im Detail beschrieben. So verdeutlicht Figur 2 die unterschiedlichen Schritte des erfindungsgemäßen Verfahrens. In einem ersten Schritt 14 wird ein Datum von der Datenquelle 10 an die Datenempfänger 11, 12 und 13 übermittelt. Bei diesem Datum kann es sich zum Beispiel um eine Nachricht, insbesondere um eine Fehlermeldung, handeln. Im Anschluss an die Übermittlung des Datums von der Datenquelle 10 an die Datenempfänger 11, 12 und 13 im Sinne des Schritts 14 übermitteln die Datenempfänger 11, 12 und 13 in einem Schritt 15 eine Empfangsbestätigung über den Erhalt des Datums automatisch an die Datenquelle 10. Jede Empfangsbestätigung eines jeden Datenempfängers 11, 12 und 13 enthält eine eineindeutige Kennung über das von der Datenquelle 10 versendete bzw. das von dem Datenempfänger 11, 12 bzw. 13 empfangene Datum sowie über den jeweiligen Datenempfänger 11, 12 bzw. 13. Hierdurch wird der Datenquelle 10 mitgeteilt, dass jeder der Datenempfänger 11, 12 und 13 das versendete Datum ordnungsgemäß empfangen hat. Im Sinne des nachgeschalteten Schritts 16 werden die Empfangsbestätigungen von der Datenquelle 10 gesammelt und gespeichert. Sobald nun einer der Datenempfänger 11, 12 bzw. 13 die Bearbeitung des von der Datenquelle 10 übermittelten Datums vorgenommen hat und die Bearbeitung entsprechend quittiert, wird im Sinne des Schritts 17 von dem Datenempfänger 11, 12 bzw. 13, der die Bearbeitung des Datums vorgenommen hat, eine Quittung bzw. eine Bearbeitungsbestätigung an die Datenquelle 10 übermittelt. Die Quittung bzw. Bearbeitungsbestätigung enthält wiederum eine eineindeutige Kennung über die bearbeitete Nachricht sowie die Bearbeitungsstation, von der die Bearbeitung durchgeführt wurde. Als Reaktion auf diese Quittung bzw. Bearbeitungsbestätigung wird im nachgeschalteten Schritt 18 von der Datenquelle 10 das Datum von den übrigen Datenempfängern automatisch zurückgezogen. Dies erfolgt durch einen Abgleich der Empfangsbestätigungen mit der Bearbeitungsbestätigung. Hierdurch wird demnach das Datum auf allen übrigen Datenempfängern ungültig.

Es liegt weiterhin im Sinne der hier vorliegenden Erfindung, dass im Zusammenhang mit Schritt 18 nicht lediglich das Datum von den übrigen Datenempfängern zurückgezogen wird, sondern vielmehr auf den Datenempfängern, von welchen das Datum zurückzogen wird, auch ein Datum über die Bearbeitung des zurückgezogenen Datums durch einen der Datenempfänger angezeigt wird.

An dieser Stelle sei darauf hingewiesen, dass das erfindungsgemäße Verfahren in einer vereinfachten Form auch ohne die Übermittlung von Empfangsbestätigungen von den Datenempfängern an die Datenquelle erfolgen kann. Dies ist für das Zurückziehen eines quittierten Datums nicht unbedingt erforderlich, wenn die Datenquelle die Datenempfänger, an die das Datum übermittelt wurde, speichert und damit kennt.

Mit Hilfe des erfindungsgemäßen Verfahrens kann ein Datum gezielt von allen Datenempfängern zurückgezogen werden, sobald einer der Datenempfänger die Bearbeitung des Datums quittiert hat. Probleme mit veralteten Daten werden hierdurch vermieden. Das erfindungsgemäße Verfahren ist einfach und effektiv.

Bei der Datenquelle 10 kann es sich zum Beispiel um eine Automatisierungseinrichtung, zum Beispiel eine speicherprogrammierbare Steuerung (SPS), handeln. Benötigt die speicherprogrammierbare Steuerung zum Beispiel wegen eines Störfalls eine Aktion von einer übergeordneten Automatisierungseinrichtung, zum Beispiel von einem Prozessleitrechner, so übermittelt die als Datenquelle dienende, speicherprogrammierbare Steuerung ein entsprechendes Datum, zum Beispiel eine Fehlermeldung, an alle übergeordneten Prozessleitrechner, mit der die speicherprogrammierbare Steuerung verbunden ist. Der Empfang der Fehlermeldung wird durch die Prozessleitrechner bestätigt, indem dieselben eine Empfangsbestätigung an die speicherprogrammierbare Steuerung übermitteln. Der erste Prozessleitrechner, der genug freie Kapazitäten besitzt, nimmt die Bearbeitung der Fehlermeldung vor und quittiert nach Bearbeitung der Fehlermeldung die Bearbeitung, indem derselbe eine Bearbeitungsbestätigung an die speicherprogrammierbare Steuerung übermittelt. Durch einen Abgleich zwischen der Bearbeitungsbestätigung und den Empfangsbestätigungen betreffend dieselbe Fehlermeldung werden von der speicherprogrammierbaren Steuerung die Datenempfänger, nämlich Prozessleitrechner, ermittelt, auf denen die Fehlermeldung noch angezeigt wird, obwohl dieselbe bereits bearbeitet und damit veraltet ist. Die speicherprogrammierbare Steuerung zieht dann erfindungsgemäß diese Fehlermeldung von den ermittelten Prozessleitrechnern zurück.

Die Datenquelle 10 kann auch als Produktionsanlage ausgebildet sein, die aufgrund eines unvorhersehbaren Fehlers als Datum eine entsprechende Fehlernachricht an als Bearbeitungsstationen ausgebildete Datenempfänger übermittelt. Ein Operateur, der an seiner Bearbeitungsstation die Fehlernachricht zuerst bemerkt und das der Fehlernachricht zugrundeliegende Problem beseitigt, quittiert die Bearbeitung der Fehlernachricht und eine entsprechende Bearbeitungsbestätigung wird von seiner Bearbeitungsstation an die Produktionsanlage übermittelt. Als Folge dieser Bestätigung wird dann automatisch von den anderen Bearbeitungsstationen die Fehlernachricht mit der optionalen Meldung zurückgezogen, dass die Fehlernachricht bereits von der Bearbeitungsstation des Operateurs bearbeitet wurde. Hierdurch ist sichergestellt, dass die Fehlermeldung lediglich von einem Operateur bearbeitet wird und somit die anderen Operateure die veraltete Fehlermeldung nicht erneut bearbeiten.

Ein weiteres Anwendungsgebiet der hier vorliegenden Erfindung liegt in der Bereitstellung einer grafischen Oberfläche gleichzeitig auf mehreren Datenempfängern. Bei dieser grafischen Oberfläche kann es sich zum Beispiel um ein so genanntes GUI (Graphical User Interface)-Fenster mit einer Eingabeaufforderung handeln, welches gleichzeitig auf mehreren Client-Rechnern aufgebaut wird. Sobald an einem Client-Rechner der Eingabeaufforderung im GUI-Fenster nachgekommen wird, werden als Folge einer entsprechenden Bearbeitungsbestätigung die bislang untätigen GUI-Fenster auf den anderen Client-Rechnern geschlossen und nur noch mit dem Client-Rechner weitergearbeitet, der zuerst auf die Eingabeaufforderung reagiert hat. Auch hier ist dann sichergestellt, dass ein Datum nur von einem Datenempfänger, in diesem Beispiel von einem Client-Rechner, bearbeitet wird.

Zur Durchführung des erfindungsgemäßen Verfahrens sind in die Datenquelle Mittel zum Speichern und Verwalten der Empfangsbestätigungen sowie Mittel zum automatischen Zurückziehen eines Datums integriert. Die Mittel zum Zurückziehen eines Datums führen einen Abgleich zwischen den Empfangsbestätigungen und der Bearbeitungsbestätigung aus. Wie bereits erwähnt, geben die Empfangsbestätigungen Aufschluss darüber, welcher Datenempfänger welche Nachricht erhalten hat. Die Bearbeitungsbestätigung gibt Aufschluss darüber, welcher der Datenempfänger, die ein Datum empfangen haben, die Bearbeitung desselben durchgeführt und quittiert hat. Sowohl die Empfangsbestätigung als auch die Bearbeitungsbestätigung stellen eine eineindeutige Kennung des Datums und der Datenempfänger bereit. Die Datenempfänger enthalten Mittel, um den Empfang eines Datums zu bestätigen und andererseits eine Bearbeitung des Datums zu quittieren.

Die Erfindung lässt sich besonders vorteilhaft im Zusammenhang mit Automatisierungssystemen nutzen.

Es sei darauf hingewiesen, dass die Kommunikation zwischen der Datenquelle und den Datenempfängern auf beliebige Weise erfolgen kann. So können die Daten zwischen der Datenquelle und den Datenempfängern zum Beispiel über das Internet oder einen anderen Kommunikationskanal bzw. eine andere Kommunikationsplattform ausgetauscht werden. Es ist lediglich darauf zu achten, dass die Datenquelle und die Datenempfänger zur Kommunikation kompatible Datenprotokolle verwenden.

## Patentansprüche

1. Verfahren zur Handhabung, nämlich zum Versenden und Zurückziehen, von Nachrichten in einem Automatisierungssystem mit mehreren Automatisierungseinrichtungen, wobei mindestens eine Automatisierungseinrichtung als Datenquelle (10) dient und wobei mehrere Automatisierungseinrichtungen als Datenempfänger (11, 12, 13) dienen, wobei von einer Datenquelle eine (10) Nachricht an mehrere Datenempfänger (11, 12, 13) versendet wird, **dadurch gekennzeichnet, dass** dann, wenn von einem der Datenempfänger (11, 12, 13) eine von der Datenquelle (10) versendete Nachricht quittiert wird, diese quittierte Nachricht vorzugsweise von der Datenquelle (10) für die übrigen Datenempfänger (11, 12, 13) automatisch zurückgezogen wird.

2. Verfahren nach Anspruch 1, **dadurch gekennzeichnet, dass** der Empfang der Nachricht von jedem Datenempfänger **dadurch** bestätigt wird, dass jeder Datenempfänger an die Datenquelle eine Empfangsbestätigung übermittelt.

3. Verfahren nach Anspruch 2, **dadurch gekennzeichnet, dass** die Empfangsbestätigungen eine für die Nachricht und den jeweiligen Datenempfänger eineindeutige Kennung enthalten.

4. Verfahren nach Anspruch 2 oder 3, **dadurch gekennzeichnet, dass** die Empfangsbestätigungen von der Datenquelle gespeichert werden.

5. Verfahren nach einem oder mehreren der Ansprüche 1 bis 4, **dadurch gekennzeichnet, dass** der Datenempfänger, welcher die Bearbeitung einer Nachricht quittiert, eine Bearbeitungsbestätigung an die Datenquelle übermittelt, wobei auf Basis der Bearbeitungsbestätigung diese quittierte Nachricht von der Datenquelle von den übrigen Datenempfängern automatisch zurückgezogen wird.

6. Verfahren nach Anspruch 5, **dadurch gekennzeichnet, dass** zusätzlich zum Zurückziehen der Nachricht für die übrigen Datenempfänger die Bearbeitung der Nachricht durch einen anderen Datenempfänger angezeigt wird.

7. Verfahren nach einem oder mehreren der Ansprüche 1 bis 6, **dadurch gekennzeichnet, dass** als Nachrichten Fehlermeldungen gehandhabt werden.

8. Automatisierungseinrichtung zur Handhabung, nämlich zum Versenden und Zurückziehen, von Nachrichten in einem Automatisierungssystem mit mehreren Automatisierungseinrichtungen, wobei die Automatisierungseinrichtung als Datenquelle (10) dient und wobei die mehreren Automatisierungseinrichtungen als Da-tenempfänger (11, 12, 13) dienen, wobei die Datenquelle (10) eine Nachricht an die mehreren Datenempfänger (11, 12, 13) versendet, **gekennzeichnet durch** Mittel, die dann, wenn von einem der Datenempfänger (11, 12, 13) ein von der Datenquelle (10) versendete Nachricht quittiert wird, diese quittierte Nachricht für die übrigen Datenempfänger (11, 12, 13) automatisch zurückziehen

9. Automatisierungseinrichtung nach Anspruch 8, **dadurch gekennzeichnet, dass** die Mittel zum Zurückziehen der Nachricht Bestandteil der Datenquelle sind.

10. Automatisierungseinrichtung nach Anspruch 8 oder 9, **dadurch gekennzeichnet, dass** die Datenempfänger Mittel aufweisen, die den Empfang der Nachricht **dadurch** bestätigen, dass an die Datenquelle eine Empfangsbestätigung übermittelt wird, wobei die Empfangsbestätigung eine für die Nachricht und den jeweiligen Datenempfänger eineindeutige Kennung enthält.

11. Automatisierungseinrichtung nach einem oder mehreren der Ansprüche 8 bis 10, **dadurch gekennzeichnet, dass** die Datenempfänger Mittel aufweisen, welche die Bearbeitung einer Nachricht **dadurch** quittieren, dass eine Bearbeitungsbestätigung an die Datenquelle übermittelt wird, wobei die Datenquelle auf Basis einer Bearbeitungsbestätigung diese quittierte Nachricht von den übrigen Datenempfängern automatisch zurückzieht.

12. Automatisierungseinrichtung nach einem oder mehreren der Ansprüche 8 bis 11, **dadurch gekennzeichnet, dass** die Mittel zum Zurückziehen der Nachricht zusätzlich die Bearbeitung der Nachricht durch einen anderen Datenempfänger anzeigen.

13. Automatisierungssystem mit mehreren Automatisierungseinrichtungen, die untereinander Nachrichten austauschen, wobei mindestens eine als Datenquelle (10) dienende Automatisierungseinrichtung Nachrichten an mehrere als Datenempfänger (11, 12, 13) dienende Automatisierungseinrichtungen versendet, **gekennzeichnet durch** Mittel, die dann, wenn von einer der als Datenempfänger (11, 12, 13) dienenden Automatisierungseinrichtungen eine von der als Datenquelle (10) dienenden Automatisierungseinrichtung versendete Nachricht quittiert wird, diese quittierte Nachricht für die übrigen als Datenempfänger (11, 12, 13) dienenden Automatisierungseinrichtungen automatisch zurückziehen.

14. Automatisierungssystem nach Anspruch 13, **dadurch gekennzeichnet, dass** die Mittel zum Zurückziehen der Nachricht Bestandteil der als Datenquelle dienenden Automatisierungseinrichtung sind.

15. Automatisierungssystem nach Anspruch 13 oder 14, **dadurch gekennzeichnet, dass** die als Datenempfänger dienenden Automatisierungseinrichtung Mittel aufweisen, die den Empfang der Nachricht **dadurch** bestätigen, dass an die als Datenquelle dienende Automatisierungseinrichtung eine Empfangsbestätigung übermittelt wird, wobei die Empfangsbestätigung eine für die Nachricht und den jeweiligen Datenempfänger eineindeutige Kennung enthält.

16. Automatisierungssystem nach einem oder mehreren der Ansprüche 13 bis 15, **dadurch gekennzeichnet, dass** die als Datenempfänger dienenden Automatisierungseinrichtungen Mittel aufweisen, welche die Bearbeitung der Nachricht **dadurch** quittieren, dass eine Bearbeitungsbestätigung an die als Datenquelle dienende Automatisierungseinrichtung übermittelt wird, wobei die Datenquelle auf Basis einer Bearbeitungsbestätigung dieser Nachricht von den übrigen als Datenempfänger dienenden Automatisierungseinrichtungen automatisch zurückzieht.

17. Automatisierungssystem nach einem oder mehreren der Ansprüche 13 bis 16, **dadurch gekennzeichnet, dass** die Mittel zum Zurückziehen der Nachricht zusätzlich die Bearbeitung der Nachricht durch eine andere, als Datenempfänger dienende Automatisierungseinrichtung anzeigen.

## Claims

1. Method for handling, namely for sending and withdrawing of messages in an automation system with a number of automation devices, with at least one automation device serving as a data source and with a number of automation devices serving as data recipients (11, 12, 13), with a message being sent from one data source (10) to a number of data recipients, **characterised in that**,
if a message sent by the data source (10) is acknowledged by one of the data recipients (11, 12, 13) this acknowledged message is preferably withdrawn by the data source (10) for the remaining data recipients.

2. Method according to claim 1, **characterised in that** the receipt of the message is confirmed by each data recipient **in that** each data recipient transfers to the data source a receive acknowledgement.

3. Method according to claim 2, **characterised in that** the receive confirmations contain a unique identifier for the message and the respective data recipient.

4. Method according to claim 2 or 3, **characterised in that** the receive confirmations are stored by the data source.

5. Method according to one or more of claims 1 to 4, **characterised in that** the data recipient that acknowledges the processing of a message transfers a processing confirmation to the data source, with this acknowledged message being automatically withdrawn by the data source on the basis of the processing confirmation from the remaining data recipients.

6. Method according to claim 5, **characterised in that**, in addition to the withdrawal of the messages for the remaining data recipients, the processing of the message by another data recipient is shown.

7. Method according to one or more of claims 1 to 6, **characterised in that** error messages are handled as messages.

8. Automation device for handling, namely for sending and withdrawing of messages in a automation system with a number of automation devices, with the automation device serving as a data source (10) and with the number of automation devices serving as data recipients (11, 12, 13), with the data source (10) sending a message to the number of data recipients (11, 12, 13), **characterised by** means, which, if a message sent from the data source (10) is acknowledged by one of the data recipients (11, 12, 13), this acknowledged message is automatically withdrawn for the other data recipients (11, 12, 13).

9. Automation device according to claim 8, **characterised in that** the means for withdrawal of the message are a component of the data source.

10. Automation device according to claim 8 or 9, **characterised in that** the data recipients have means which confirm the receipt of the message by transferring a receive acknowledgement to the data source indicating that a receive acknowledgement has been transferred to the data source, with the receive acknowledgement containing a unique identifier for the message and the respective data recipient.

11. Automation device according to one of the claims 8 to 10, **characterised in that** the data recipients have means that acknowledge the processing of a message by transferring a processing confirmation to the data source, with the data source automatically withdrawing this acknowledged message on the basis of a processing confirmation.

12. Automation device according to one or more of claims 8 to 11, **characterised in that** the means for withdrawing the message additionally show the processing of the message by another data recipient.

13. Automation system with a number of automation devices which exchange messages with each other, with at least one automation device serving as a data source (10) sending messages to a number of automation devices serving as data recipients (11, 12, 13), **characterised by** means which, if a message sent by the device serving as data source (10) is acknowledged by one of the automation devices serving as data recipient (11, 12, 13), this acknowledged message is automatically withdrawn from the remaining devices serving as data recipients (11, 12, 13).

14. Automation system according to claim 13, **characterised in that** the means for withdrawing the message are a component of the automation device serving as data source.

15. Automation system according to claim 13 or 14, **characterised in that**, the automation device serving as data recipient has means which confirm the receipt of the message in that a receive acknowledgement is transferred to the automation device serving as data source, with the receive acknowledgement containing a unique identifier for the message and the respective data recipient.

16. Automation system according to one or more of claims 13 to 15, **characterised in that** the automation devices servings as data recipients feature means that acknowledge the processing of the message by transferring a processing confirmation to the automation device serving as data source, with the data source automatically withdrawing this message from the remaining automation devices serving as data recipients on the basis of a processing confirmation.

17. Automation system according to one or more of claims 13 to 16, **characterised in that** the means for withdrawing the message additionally display the processing of the message by another automation device serving as data recipient.

## Revendications

1. Procédé pour la manipulation, à savoir l'envoi et l'annulation, de messages dans un système d'automatisation comportant plusieurs dispositifs d'automatisation, au moins un dispositif d'automatisation servant de source de données (10) et plusieurs dispositifs d'automatisation servant de récepteurs de données (11, 12, 13), un message étant envoyé par une source de données (10) à plusieurs récepteurs de données (11, 12, 13), **caractérisé par le fait que**, si un message envoyé par la source de données (10) est confirmé par l'un des récepteurs de données (11, 12, 13), ce message confirmé est annulé de préférence automatiquement par la source de données (10) pour les autres récepteurs de données (11, 12, 13).

2. Procédé selon la revendication 1, **caractérisé par le fait que** la réception du message par chaque récepteur de données est confirmée **par le fait que** chaque récepteur de données transmet une confirmation de réception à la source de données.

3. Procédé selon la revendication 2, **caractérisé par le fait que** les confirmations de réception contiennent un identificateur univoque pour le message et pour le récepteur de données respectif.

4. Procédé selon la revendication 2 ou 3, **caractérisé par le fait que** les confirmations de réception sont mémorisées par la source de données.

5. Procédé selon une ou plusieurs des revendications 1 à 4, **caractérisé par le fait que** le récepteur de données, qui confirme le traitement d'un message, transmet une confirmation de traitement à la source de données, ce message confirmé étant automatiquement annulé pour les autres récepteurs de données par la source de données sur la base de la confirmation de traitement.

6. Procédé selon la revendication 5, **caractérisé par le fait que**, en plus de l'annulation du message pour les autres récepteurs de données, le traitement du message par un autre récepteur de données est signalé.

7. Procédé selon une ou plusieurs des revendications 1 à 6, **caractérisé par le fait que** des messages d'erreurs sont manipulés comme messages.

8. Dispositif d'automatisation pour la manipulation, à savoir l'envoi et l'annulation, de messages dans un système d'automatisation comportant plusieurs dispositifs d'automatisation, le dispositif d'automatisation servant de source de données (10) et les autres dispositifs d'automatisation servant de récepteurs de données (11, 12, 13), la source de données (10) envoyant un message à la pluralité de récepteurs de données (11, 12, 13), **caractérisé par** des moyens qui, si un message envoyé par la source de données (10) est confirmé par l'un des récepteurs de données (11, 12, 13), annulent automatiquement ce message confirmé pour les autres récepteurs de données (11, 12, 13).

9. Dispositif d'automatisation selon la revendication 8, **caractérisé par le fait que** les moyens destinés à l'annulation du message font partie de la source de données.

10. Dispositif d'automatisation selon la revendication 8 ou 9, **caractérisé par le fait que** les récepteurs de données comportent des moyens qui confirment la réception du message en transmettant une confirmation de réception à la source de données, la confirmation de réception contenant un identificateur univoque pour le message et pour le récepteur de données respectif.

11. Dispositif d'automatisation selon une ou plusieurs des revendications 8 à 10, **caractérisé par le fait que** les récepteurs de données comportent des moyens qui confirment le traitement d'un message en transmettant une confirmation de traitement à la source de données, la source de données annulant automatiquement ce message confirmé, sur la base d'une confirmation de traitement, pour les autres récepteurs de données.

12. Dispositif d'automatisation selon une ou plusieurs des revendications 8 à 11, **caractérisé par le fait que** les moyens destinés à l'annulation du message signalent en plus le traitement du message par un autre récepteur de données.

13. Système d'automatisation comportant plusieurs dispositifs d'automatisation qui échangent des messages entre eux, au moins un dispositif d'automatisation servant de source de données (10) envoyant des messages à plusieurs dispositifs d'automatisation servant de récepteurs de données (11, 12, 13), **caractérisé par** des moyens qui, si un message envoyé par le dispositif d'automatisation servant de source de données (10) est confirmé par l'un des dispositifs d'automatisation servant de récepteurs de données (11, 12, 13), annulent automatiquement ce message confirmé pour les autres dispositifs d'automatisation servant de récepteurs de données (11, 12, 13).

14. Système d'automatisation selon la revendication 13, **caractérisé par le fait que** les moyens destinés à l'annulation du message font partie du dispositif d'automatisation servant de source de données.

15. Système d'automatisation selon la revendication 13 ou 14, **caractérisé par le fait que** les dispositifs d'automatisation servant de récepteurs de données comportent des moyens qui confirment la réception du message en transmettant une confirmation de réception au dispositif d'automatisation servant de source de données, la confirmation de réception contenant un identificateur univoque pour le message et pour le récepteur de données respectif.

16. Système d'automatisation selon une ou plusieurs des revendications 13 à 15, **caractérisé par le fait que** les dispositifs d'automatisation servant de récepteurs de données comportent des moyens qui confirment le traitement du message en transmettant une confirmation de traitement au dispositif d'automatisation servant de source de données, la source de données annulant automatiquement ce message confirmé, sur la base d'une confirmation de traitement, pour les autres dispositifs d'automatisation servant de récepteurs de données.

17. Système d'automatisation selon une ou plusieurs des revendications 13 à 16, **caractérisé par le fait que** les moyens pour l'annulation du message signalent en plus le traitement du message par un autre dispositif d'automatisation servant de récepteur de données.
